# EUROPÄISCHE PATENTSCHRIFT

(11) **EP 1 972 134 B1**
(45) Veröffentlichungstag und Bekanntmachung des Hinweises auf die Patenterteilung: **13.06.2012**
(21) Anmeldenummer: 07702731.6
(22) Anmeldetag: 12.01.2007
(51) Int. Cl.: H04N 9/31

(54) **KALIBRIERUNGSVERFAHREN UND KALIBRIERUNGSSYSTEM FÜR PROJEKTIONSVORRICHTUNG**
CALIBRATION METHOD AND CALIBRATION SYSTEM FOR PROJECTION APPARATUS
PROCÉDÉ DE CALIBRAGE ET SYSTÈME DE CALIBRAGE POUR DISPOSITIF DE PROJECTION

(30) Priorität: 13.01.2006 DE 102006002602
(43) Veröffentlichungstag der Anmeldung: 24.09.2008
(73) Patentinhaber: Fraunhofer-Gesellschaft zur Förderung der angewandten Forschung e.V., 80686 München (DE)
(72) Erfinder: SCHIEWE, Manuel, 12105 Berlin (DE); KLOSE, Stefan, 15732 Schulzendorf (DE)
(74) Vertreter: Gross, Felix
(86) Internationale Anmeldenummer: PCT/EP2007/000258
(87) Internationale Veröffentlichungsnummer: WO 2007/082690

(56) Entgegenhaltungen:
- US-A1- 2002 024 640
- US-A1- 2004 184 011
- US-A1- 2004 184 013
- US-A1- 2004 257 540
- US-A1- 2006 001 839

## Beschreibung

Die Erfindung betrifft ein Kalibrierungsverfahren nach dem Oberbegriff des Anspruchs 1 und ein Kalibrierungssystem nach dem Anspruch 13.

In vielen Bereichen werden heute Projektionsvorrichtungen dazu verwendet, größere und komplexe Projektionsflächen mit Bildern, Filmen oder Ähnlichem zu bestrahlen. Da die Projektionsflächen in der Regel nicht eben sind und die Gesamtbilder aus Teilbildern zusammengesetzt sind, ergibt sich das Problem, dass im Übergangsbereich zweier Teilbilder, Verzerrungen auftreten. Auch ist es z.B. bei kuppelförmigen Projektionsflächen nicht möglich, eine Projektion mit nur einem Projektor vorzunehmen. Bei mehreren Projektoren tritt dann das Problem der Überlappung vielfach auf.

Die US 2002/002 46 40 A1 beschreibt ein Verfahren, um geometrische Deformationen bei Projektion auf eine Projektionsfläche zu kompensieren. Dazu werden flache LCD-Panels als Projektoren angenommen, und eine betrachtete Projektionsfläche wird durch eine ebene Fläche oder durch eine Vielzahl von ebenen Teilflächen angenähert.

Der vorliegenden Erfindung liegt die Aufgabe zugrunde, ein Kalibrierungsverfahren und ein Kalibrierungssystem zu schaffen, mit dem große und / oder komplexe Projektionsflächen mit einer Projektionsvorrichtung möglichst verzerrungsfrei bestrahlt werden können.

Diese Aufgabe wird erfindungsgemäß durch ein Verfahren mit den Merkmalen des Anspruchs 1 gelöst.

Mindestens eine Projektionsvorrichtung projiziert dabei vorbekannte Kalibriermuster auf mindestens einen Teil einer Projektionsfläche, wobei die Kalibriermuster untereinander mindestens einen Überlappungsbereich aufweisen. Die Kalibriermuster werden von mindestens einer Kameravorrichtung als Kalibrierbild aufgenommen und die Daten des Kalibrierbildes werden an eine Rechnereinheit übertragen, wobei mittels der Rechnereinheit automatisch die Abweichung zwischen dem aufgenommenen realen Kalibrierbild und einem idealen Abbildungsergebnis des vorbekannten Kalibriermusters auf der Projektionsfläche als Referenzmuster ermittelt wird. Das anhand der vorbekannten Daten ermittelte ideale Abbildungsergebnis dient somit als Referenz für die tatsächliche Projektion, die von der Kameravorrichtung aufgenommen wurde.

Anschließend wird aus der Abweichung zwischen realem Kalibrierbild und dem Referenzmuster eine Korrekturtransformation ermittelt, so dass die Verknüpfung der Korrekturtransformation mit einer realen Projektion von Bildern durch die mindestens eine Projektionsvorrichtung insbesondere in einem Überlappungsbereich bis auf eine kleine, insbesondere minimale Abweichung dem Referenzmuster entspricht. Dabei kann z.B. ein bestimmter Schwellenwert für die Abweichung vorschrieben werden, der für einen Betrachter noch eine akzeptable Verzerrung ergibt.

Die Korrekturtransformation weist eine Verschiebung mindestens eines Punktes, insbesondere eines Stützpunktes des real aufgenommenen Kalibrierbildes auf einen Punkt des Referenzmusters auf. Bei dieser ersten Ausführungsform wird ein real ermittelter Punkt, z.B. der Schnittpunkt in einem Kalibriermuster auf den rechnerisch ermittelten Referenzort verschoben. Bei mehreren Punkten können die Transformationen (z.B. Verschiebungen) für jeden Punkt auch unterschiedlich ausfallen.

Eine vorteilhafte Ausgestaltung des erfindungsgemäßen Verfahren verfügt über eine Projektionsfläche, die mindestens teilweise eine Kugelschale, eine Zylinderschale und / oder eine ebene Fläche aufweist. Solche Flächen eigenen sich für Projektionen in besonderer Weise.

Auch ist es vorteilhaft, wenn die Kameravorrichtung mindestens eine Digitalkamera, mindestens eine Videokamera, mindestens eine Fish-Eye Kamera und / oder mindestens eine Webcam aufweist. Diese Kameras sind einzeln und / oder zusammen gut geeignet, schnell ein Kalibriermuster aufzunehmen und die entsprechenden Daten zur Weiterverarbeitung an die Rechnereinheit in die Wege zu leiten.

Gerade bei größeren Projektionsflächen oder gar 360°-Flächen ist es vorteilhaft, wenn mindestens eine Kameravorrichtung zur Aufnahme eines Bildes von der Projektionsfläche um mindestens eine Achse drehbar gelagert ist. Damit kann ein entsprechend projiziertes Kalibriermuster effizient aufgenommen werden.

Vorteilhaft ist, wenn mindestens eine Projektionsvorrichtung mindestens einen Beamer, Laserprojektor, LCD-Projektor und / oder DLP-Projektor aufweist

Vorteilhafterweise ist das mindestens eine Kalibriermuster ein Streifenmuster, bei dem einzelne Streifen parallel zueinander angeordnet sind.

Auch können die Streifen vorteilhafterweise gekrümmt (vorverzerrt), einfarbig, mehrfarbig und oder farbcodiert ausgebildet sein. Eine weitere vorteilhafte Ausführungsform verwendet Punktmuster, wobei in einem Kalibriermuster auch mehrere verschiedene Musterarten (z.B. Punkt- und Streifenmuster) verwendet werden können.

Zur Unterdrückung von störenden Lichteinflüssen ist es vorteilhaft, wenn vor der Auswertung einer Aufnahme mindestens eines Kalibriermusters die Kameravorrichtung ein Schwarzbild aufnimmt. Ein Schwarzbild ist Foto einer schwarzen Projektion durch die Projektorvorrichtung. Dieses Schwarzbild enthält u.a. Blendlichter, die dann bei einer nachfolgenden Bearbeitung herausgerechnet werden können.

Bei einer weiteren vorteilhaften Ausgestaltung des erfindungsgemäßen Kalibrierungsverfahrens wird im Überlappungsbereich ein Blending zur Anpassung der Helligkeitswerte vorgenommen.

Die Korrekturtransformation ermittelt die notwendigen Veränderungen in den Projektionen. Zusätzlich oder auch alternativ kann die Veränderung der Projektion nicht nur rechnerisch geschehen, sondern es kann auch mindestens eine räumliche Orientierung mindestens einer Projektionsvorrichtung automatisch in Abhängigkeit von der Korrekturtransformation verändert werden.

Ferner können vorteilhafterweise Parameter der Kameravorrichtung automatisch ermittelt werden, indem eine Aufnahme eines vorbekannten Musters, insbesondere eines Markermusters auf der Projektionsfläche aufgenommen wird, so dass die Rechnereinheit daraus die Parameter berechnen kann.

Die Aufgabe wird auch durch ein Kalibrierungssystem nach Anspruch 13 gelöst.

Mindestens eine Projektionsvorrichtung dient zur Projektion vorbekannter Kalibriermuster auf mindestens einen Teil der Projektionsfläche. Die Kalibriermuster können, müssen sich aber nicht überlappen.

Mindestens eine Kameravorrichtung dient der Aufnahme der Kalibriermuster als Kalibrierbild, wobei die Daten des Kalibrierbildes an die Rechnereinheit übertragbar sind und die Rechnereinheit zur automatischen Ermittlung der Abweichung zwischen dem aufgenommenen realen Kalibrierbild und einem idealen Abbildungsergebnis (Referenzmuster) des vorbekannten Kalibriermusters auf der Projektionsfläche eingesetzt wird.

Ein Korrekturmittel dient zur Ermittlung einer Korrekturtransformation aus der Abweichung zwischen realem Kalibrierbild und dem Referenzmuster, so dass die Verknüpfung der Korrekturtransformation mit einer realen Projektion von Bildern durch die mindestens eine Projektionsvorrichtung insbesondere in einem Überlappungsbereich bis auf eine kleine, insbesondere minimale Abweichung dem Referenzmuster entspricht.

Die Erfindung wird nachfolgend unter Bezugnahme auf die Figuren der Zeichnungen an mehreren Ausführungsbeispielen näher erläutert. Es zeigen:
- Fig. 1: eine schematische Darstellung einer Ausführungsform des erfindungsgemäßen Kalibrierungssystems mit zwei Projektionsvorrichtungen;
- Fig. 2: eine schematische Darstellung einer Ausführungsform des erfindungsgemäßen Kalibrierungsverfahrens;
- Fig. 3 -: eine schematische Darstellung der Ermittlung einer Korrekturtransformation gemäß einer ersten Ausführungsform;
- Fig. 4: eine schematische Darstellung der Ermittlung einer Korrekturtransformation gemäß einer zweiten Ausführungsform;
- Fig. 5: eine Aufnahme eines Aufbaus mit drei Projektionsvorrichtungen;
- Fig. 6: eine Aufnahme einer Projektion aus drei Teilbildern vor der Ausführung des Kalibrierungsverfahrens;
- Fig. 7: eine Aufnahme einer Projektion aus drei Teilbildern nach der Ausführung des Kalibrierungsverfahrens;
- Fig. 8: eine Aufnahme der Projektion nach Fig. 7 mit einer Helligkeitskorrektur (Blending) im Überlappungsbereich;
- Fig. 9: eine Aufnahme einer Projektion in eine Kugelschale vor der Ausführung des Kalibrierungsverfahrens;
- Fig. 10: eine Aufnahme der Projektion nach Fig. 9 nach der Ausführung des Kalibrierungsverfahrens;
- Fig. 11: eine Aufnahme einer Projektion in eine Kugelschale unter Verwendung von Markern für die Verwendung in einer Ausführungsform des erfindungsgemäßen Kalibrierungsverfahrens;
- Fig. 12: ein Flussdiagramm zum Vergleich dreier Ausführungsformen;
- Fig. 13: eine schematische Darstellung des realen Strahlengangs bei der ersten Ausführungsform;
- Fig. 14: eine schematische Darstellung des virtuellen Strahlengangs bei der ersten Ausführungsform;
- Fig. 15: eine schematische Darstellung der Abbildungen eines Punktes im Kamerabildraum;
- Fig.: 16 eine schematische Darstellung der Abbildung eines Punktes im Projektorbildraum.

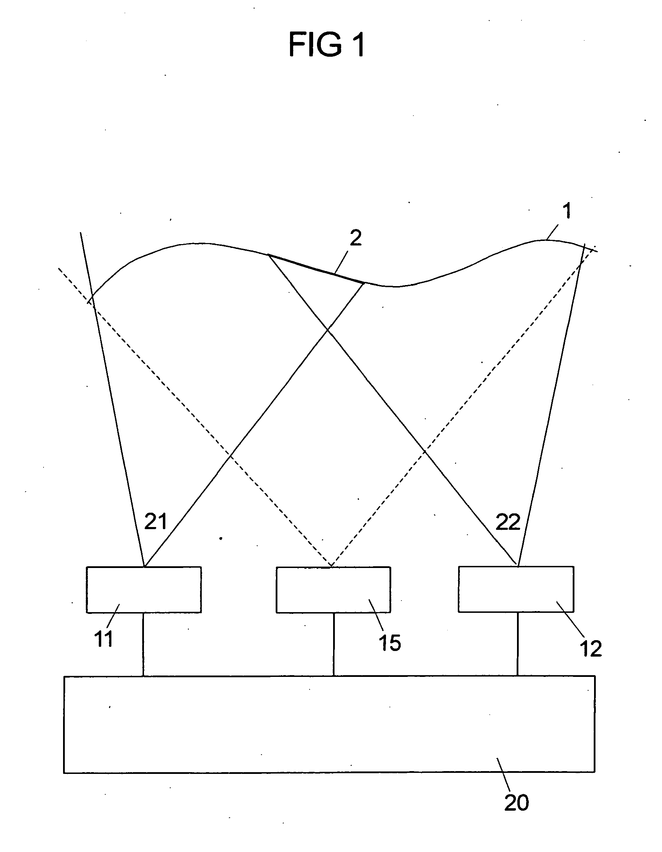

In Fig. 1 wird aus Gründen der Einfachheit eine Ausführungsform des erfindungsgemäßen Kalibrierungssystems und des erfindungsgemäßen Kalibrierungsverfahrens beschrieben, bei der zwei Projektionsvorrichtungen 11, 12 für die Projektion von Bildern auf eine Projektionsfläche 1 verwendet werden. Grundsätzlich ist es aber möglich, mehr als zwei Projektionsvorrichtungen 11, 12 zu verwenden.

Projektionen mit mehreren Projektionsvorrichtungen 11, 12 werden überall da eingesetzt, wenn auf komplexe und /.oder große Projektionsflächen 1 Bilder projiziert werden sollen.

Unter Bildern werden hier Standbilder (z.B. Panoramaansichten, Dias etc.), bewegte Bilder (z.B. Videobilder) oder auch 3D-Sequenzen verstanden. Der Begriff Bilder umfasst auch Kombinationen dieser Bildtypen.

In Fig. 1 ist eine Grundsituation für ein solches System dargestellt, wobei die Projektionsfläche 1 für die Bilder hier komplex aus unterschiedlich gekrümmten Segmenten geformt ist. Grundsätzlich können Geometrien, wie z.B. Ebene, Kugelschalen, Teile von Kugelschalen, Zylinder, Zylinderschalen oder andere konkave und / oder konvexe Geometrien für die Projektionsfläche 1 gewählt werden. Es ist ferner auch möglich, dass die Projektionsfläche 1 nicht aus einem Stück besteht, so dass die Projektionsvorrichtungen 11, 12 Bilder auf mehrere, im Raum verteilte Projektionsflächen 1 projizieren.

Grundsätzlich ist für eine Projektionsfläche 1 jede Geometrie verwendbar, deren Daten sich durch Parameter, Tabellen und / oder funktionale Zusammenhänge beschreiben lässt. Diese geometrischen Daten der Projektionsfläche 1 müssen vorab bekannt sein, da mittels dieser Daten im Rahmen der Erfindung ein theoretisch, ideales Abbildungsverhalten (d.h. ein Referenzmuster) ermittelt wird, das als Referenz für eine reale Abbildung dient.

Auf die Projektionsfläche 1 können Bilder projiziert werden, wobei diese Bilder aus Teilbildern 21, 22 der Projektionsvorrichtungen 11, 12 zusammengesetzt sind. Die Teilbilder 21, 22 überlappen sich in einem Überlappungsbereich 2, um in der Summe ein Gesamtbild zu ergeben. Bei mehr als zwei Teilbildern 21, 22 ergeben sich auch mehrere Überlappungsbereiche 2.

Die Teilbilder 21, 22 müssen im Überlappungsbereich 2 möglichst perfekt aufeinander liegen, damit man keine "Nähte" zwischen den Teilbildern 21, 22 sehen kann und ein möglichst gutes Gesamtbild entsteht.

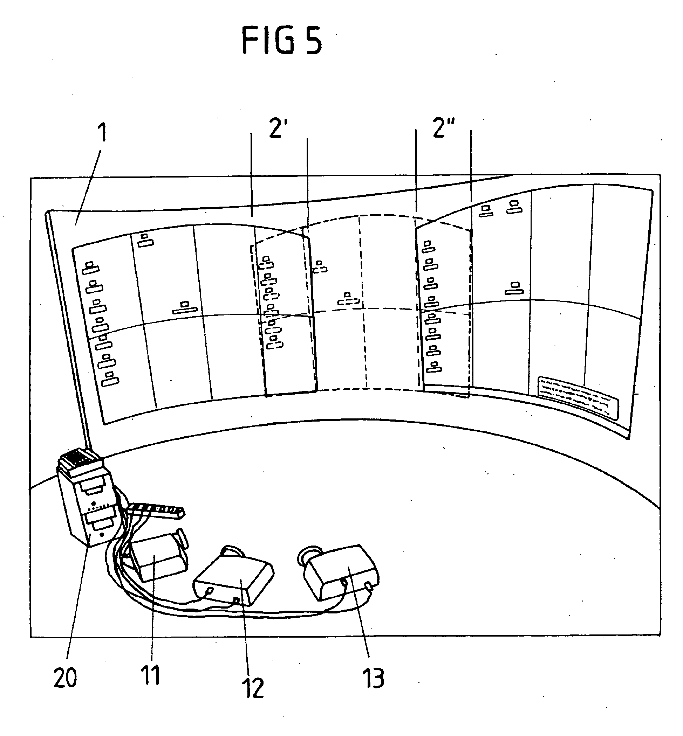

Ein realer Aufbau ist in der Abbildung der Fig. 5 dargestellt. Dabei werden drei Projektionsvorrichtungen 11, 12, 13 verwendet, die auf eine zylinderschalenförmige Projektionsfläche 1 Bilder werfen. Bei den hier vorliegenden geometrischen Verhältnissen liegen zwei Überlappungsbereiche 2', 2" zwischen den projizierten Bildern vor. Die Projektionsvorrichtungen 11, 12, 13 sind mit einer Recheneinheit 20 gekoppelt. Die Kameravorrichtung 15 ist selbst nicht sichtbar, da die Aufnahme der Fig. 5 aus der Perspektive der Kameravorrichtung 15 erfolgt.

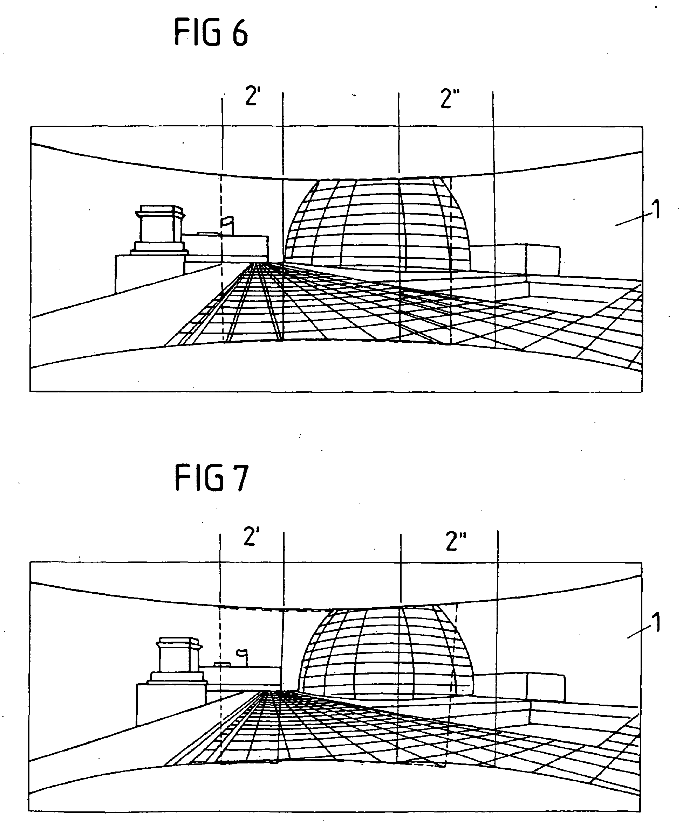

In Fig. 6 ist der nicht kalibrierte Fall dargestellt, bei dem die drei Teilbilder analog Fig. 5 in den Überlappungsbereichen 2', 2" noch nicht angepasst sind. Dies ist z.B. an den doppelten Linien auf dem Boden der Darstellung in Fig. 6 zu erkennen.

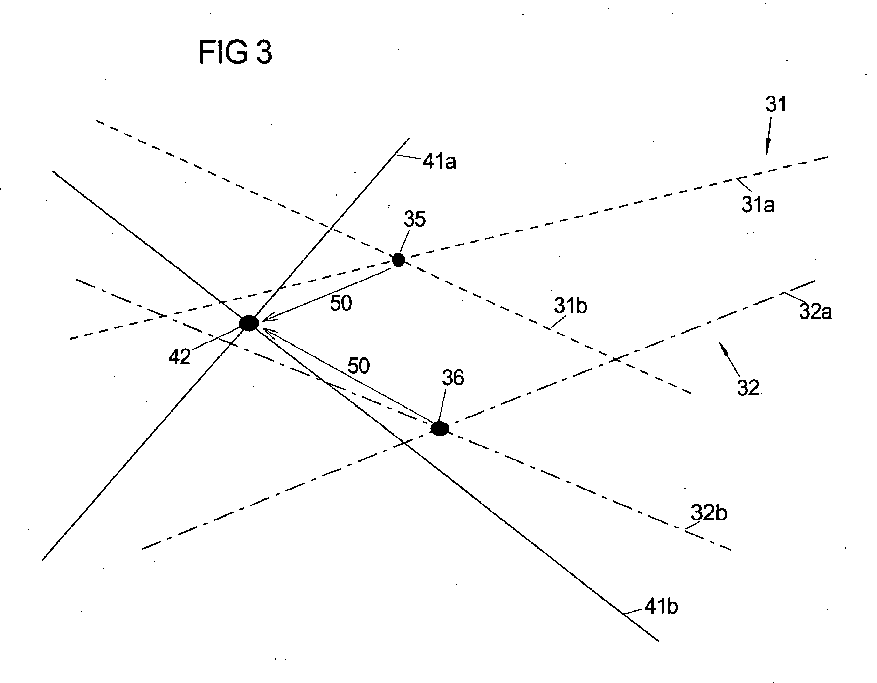

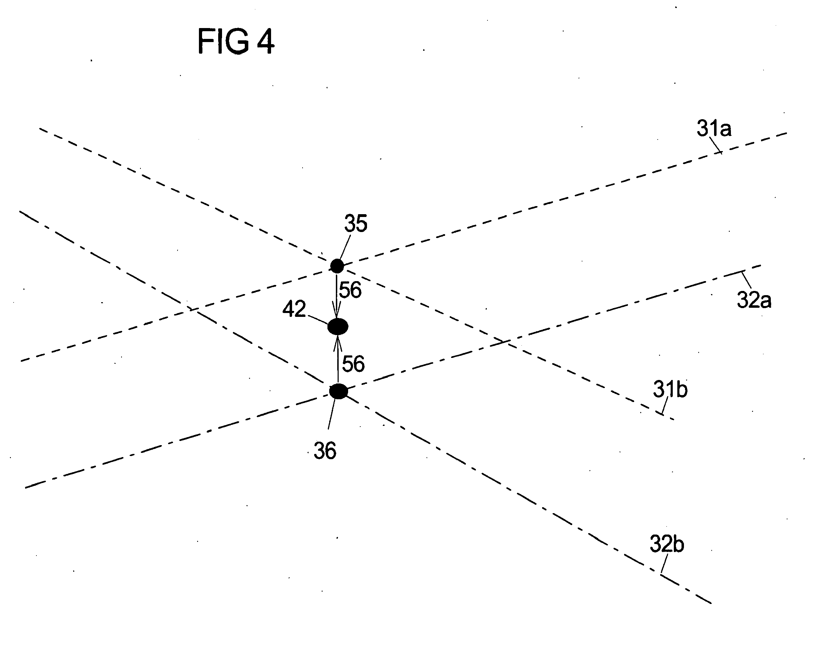

Das hier beschriebene Kalibrierungsverfahren und Kalibrierungssystem erkennt mit mindestens einer Kameravorrichtungen 15 mittels spezieller Kalibriermuster 30 (siehe auch Fig. 3 und 4) die Abweichungen (z.B. Fehler in der Ausrichtung) der Teilbilder 21, 22 im Überlappbereich 2 und korrigiert für eine spätere Projektion die Projektorbilder dahingehend, dass die Teilbilder 21, 22 im Überlappbereich 2 möglichst perfekt aufeinander liegen und somit ein nahtloses Gesamtbild gewährleistet ist (automatische Feinkalibrierung / Autokalibrierung).

Die mindestens eine Kameravorrichtung 15 kann mindestens eine digitale Fotokamera, mindestens eine Videokamera, mindestens eine Kamera mit Fischaugenlinse und / oder eine Webcam aufweisen, wobei auch Kombinationen dieser Elemente verwendbar sind.

Es können beliebige Arten von Projektionsvorrichtungen 11, 12 verwendet werden. Wenn die Projektoreigenschaften bekannt sind, sowohl die äußeren (Position, Orientierung) als auch die inneren (Öffnungswinkel, Seitenverhältnis), können diese bei einer Geometrieentzerrung rechnerisch berücksichtigt werden.

Wenn die geometrischen Daten der Projektionsfläche 1 und ggf. der Projektionsvorrichtungen 11, 12 bekannt sind, kann die notwendige Geometrieentzerrung berechnet werden, das heißt, die Projektorbilder werden zumindest so transformiert, dass sich auf der Projektionsfläche 1 ein korrektes Gesamtbild aus den Teilbildern 21, 22 ergibt.

Durch Softedge-Blending werden die Nähte im Überlappungsbereich 2 möglichst unsichtbar gemacht, das heißt, dass im Verlauf der Überlappungsbereiche 2 jeweils eine Projektionsvorrichtung 11 sanft dunkler wird (fade-out), die nächste Projektionsvorrichtung 12 in gleichem Maße sanft heller wird (fade-in), so dass in jedem Bildpunkt der Überlappungsbereiche 2 in der Summe der Projektionsvorrichtungen 11, 12 die gleiche Helligkeit erreicht wird wie in den Bereichen, die nur von einer einzelnen Projektionsvorrichtung 11, 12 bestrahlt werden.

Die Bereiche, in denen geblended werden soll, können vom Benutzer eingegeben werden (auf einer Kugel mit Höhen- und Breitengraden z.B. als "Blending zwischen Projektor 1 und Projektor 2 von Breitengrad 5 bis 10") oder der gesamte Überlappungsbereich 2 von jeweils zwei Projektionsvorrichtungen 11, 12 wird automatisch bestimmt und als Blendbereich verwendet.

Im ersteren Fall (Eingabe durch Benutzer) kann der Benutzer auch komplizierte Blendverläufe über Stützpunktdefinitionen angeben, durch die dann z.B. Splines gelegt werden.

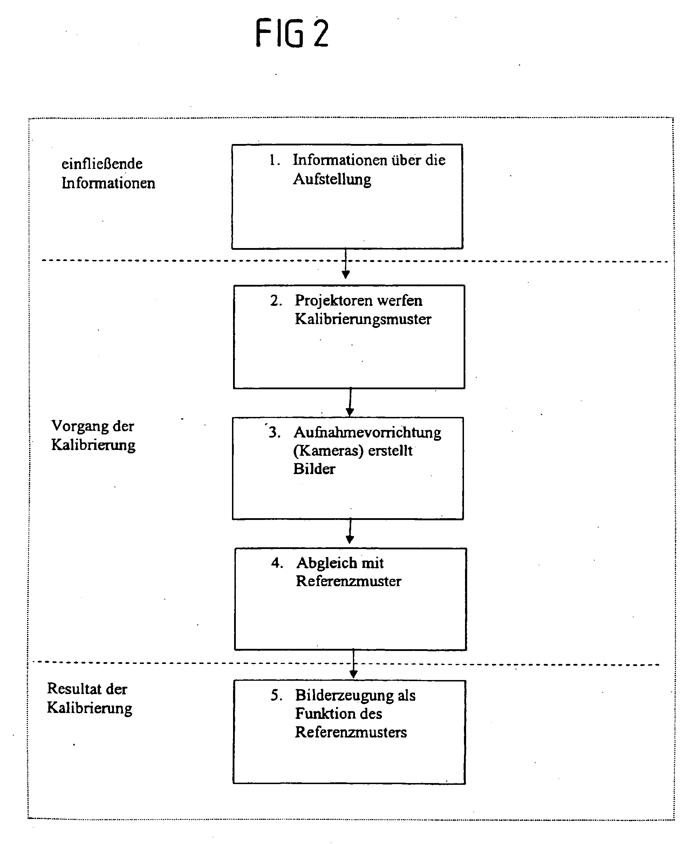

Die Funktion einer Kameravorrichtung 15 in Zusammenarbeit mit einer Recheneinheit 20 wird im Zusammenhang mit der Beschreibung der Fig. 2 beschrieben.

In Fig. 2 ist schematisch eine Ausführungsform des erfindungsgemäßen Kalibrierungsverfahrens dargestellt, mit dem die im Zusammenhang mit Fig. 1 beschriebene, möglichst nahtlose Überlappung zwischen Teilbildern 21, 22 hergestellt werden soll.

Bei der automatischen Feinkalibrierung werfen die Projektionsvorrichtungen 11, 12 nacheinander und / oder gleichzeitig bestimmte vorbekannte Streifenbilder als Kalibriermuster 30 auf die Projektionsfläche 1, die von mindestens einer Kameravorrichtung 15 (siehe Fig. 1) aufgenommen werden. Wenn z.B. die Projektionsvorrichtungen 11, 12 die Kalibriermuster 30 nacheinander projizieren, dann wird zu jedem Kalibriermuster 30 ein Bild aufgenommen, wobei z.B. in der Rechnereinheit 20 diese Bilder zu einem virtuelles Gesamtbild vereinigt werden. Das so aufgenommene Bild wird als Kalibrierbild bezeichnet.

Das Kalibrierbild zeigt die realen Verzerrungen des Kalibriermusters 30 im Überlappungsbereich 2. Die Daten des Kalibrierbildes werden an die Rechnereinheit 20 übertragen. Die Rechnreinheit 20 kann z.B. ein Prozessor, ein PC, ein Cluster von PCs oder eine Workstation aufweisen. Die Rechnereinheit 20 kann z.B. in einer der anderen Vorrichtungen angeordnet sein (Projektionsvorrichtung, Kameravorrichtung, Projektionsfläche) und / oder die Rechnereinheit 20 ist als separates System ausgebildet.

Durch die Rechnereinheit 20 wird automatisch die Abweichung zwischen dem aufgenommenen realen Kalibrierbild und einem idealen Abbildungsergebnis des vorbekannten Kalibriermusters 30 auf der Projektionsfläche 1 ermittelt. Da sowohl das Kalibriermuster 30 als auch die Geometrie der Projektionsfläche 1 bekannt ist, kann berechnet werden, wie im Idealfall das Bild im Überlappungsbereich 2 aussehen muss. Dieser Idealfall wird als Referenzmuster verwendet, dem das reale Abbildungsergebnis (d.h. das Kalibrierbild) angenähert werden soll.

Aus der Abweichung zwischen dem realen Kalibrierbild und dem idealen Abbildungsergebnis wird durch die Rechnereinheit 20 automatisch eine Korrekturtransformation 50 ermittelt, so dass die Verknüpfung der Korrekturtransformation 50 mit einer realen Projektion von Bildern durch die mindestens zwei Projektionsvorrichtungen 11, 12 im Überlappungsbereich 2 bis auf eine kleine, insbesondere minimale Abweichung, dem idealen Abbildungsergebnis entspricht.

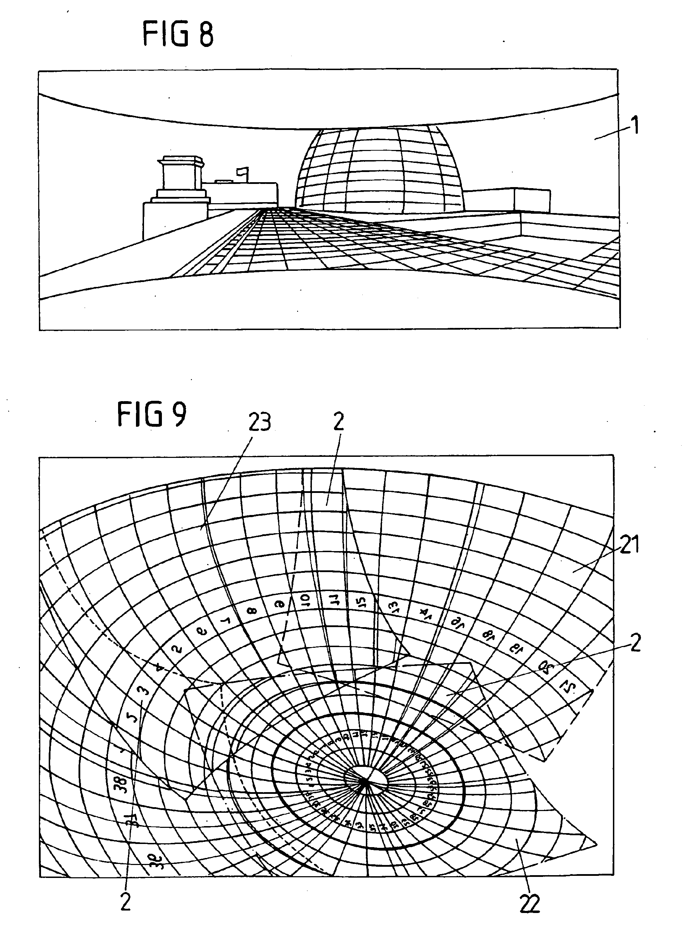

Ausgehend von den Projektionen gemäß Fig. 6 ist das Ergebnis der Kalibrierung mit einer Ausführungsform des Verfahrens in Fig. 7 dargestellt. Ein Vergleich zeigt, dass die Linien am Boden im Überlappungsbereich 2', 2" der Darstellung aufeinander liegen, so dass keine Doppellinien mehr sichtbar sind. Allerdings sind die Überlappungsbereiche 2', 2" deutlich heller als der Rest der Darstellung. Durch das oben beschriebene Blending kann das Ergebnis gemäß Fig. 8 hergestellt werden, ein gleichmäßig ausgeleuchtetes Gesamtbild.

Zu diesem grundsätzlichen Ablauf werden im Folgenden drei Ausführungsformen beschrieben.

Bei der ersten Ausführungsform müssen die äußeren (z.B. die Position) und inneren Parameter (z.B. die Linsengeometrie) der Kameravorrichtung 15 möglichst genau bekannt sein. Bei der zweiten Ausführungsform ist dies nicht erforderlich.

Für beide Ausführungsformen ist es vorteilhaft, wenn die. Parameter des Aufbaus (Geometrie und Projektionsvorrichtungen 11, 12) bekannt sind und auch ungefähr so wie geplant aufgestellt worden sind. Die Teilbilder 21, 22 passen in diesem Fall bereits einigermaßen zusammen. Nur die Fehler, die jetzt noch nicht ausgeglichen sind, sollen durch die automatische Feinkalibrierung entfernt werden.

Bei der dritten Ausführungsform sind weder die Parameter der Kameravorrichtung 15 bekannt, noch sind die Projektionsvorrichtungen 11, 12 vorjustiert.

Wie erwähnt, müssen bei der ersten Ausführungsform zusätzlich die Parameter der Kameravorrichtung 15 bekannt sein, und zwar möglichst exakt. Diese Bestimmung der Parameter, auch Kamerakalibrierung genannt, kann mit einer Ausführungsform des erfindungsgemäßen Kalibrierungsverfahrens durchgeführt werden.

Hierbei werden an bestimmten Stellen auf der Projektionsfläche 1 Marker befestigt (z.B. farbige Papierkreise, LED-Leuchten, etc.). Die zu kalibrierende Kameravorrichtung 1 nimmt Bilder auf, auf der die Marker zu erkennen sind. Die Rechnereinheit 20 analysiert die Bilder und erkennt die Orte der Marker im Kamerabild. Da die 3D-Positionen der Marker bekannt sind, können nun die Kameraparameter aus diesen Informationen berechnet werden (z.B. Position und Orientierung der Kamera).

Im ersten Ausführungsbeispiel wird der gesamte Aufbau (Projektionsfläche 1, Projektionsvorrichtungen 11, 12, Kameravorrichtungen 15) in der Recheneinheit 20 des Systems modelliert.

Im Folgenden wird anhand unterschiedlicher Ausführungsformen beschrieben, in welcher Weise Kalibriermuster 30 zur Korrektur der Verzerrung verwendet werden.

Mindestens eine Projektionsvorrichtung wirft dabei definierte Kalibriermuster 30 auf die Projektionsfläche 1, die von der Kameravorrichtung 15 aufgenommen werden (Kalibrierbild im Kamerabildraum). Das System erkennt die Muster der Projektorbilder in den Fotos wieder und hat dadurch eine Menge von Stützstellen im Projektorbildraum mit eindeutiger Zuordnung im Kamerabildraum. Die Zuordnung erfolgt mittels einer an sich bekannten Farbcodierung der Streifen. Eine solche Farbcodierung ist z.B. dem Artikel "The Hiscore Camera - A real time three dimensional and color camera" von Forster et al. in Proceedings 2001 International Conferences Image Processing, Pages 598-601 Vol. 2.

In Fig. 3 ist in vereinfachter Weise ein Kalibriermuster 30 dargestellt. Dabei wirft eine hier nicht dargestellte erste Projektionsvorrichtung 11 ein erstes Kalibriermuster 31 (gestrichelte Linien) mit horizontalen Streifen 31a und vertikalen Streifen 31b. Hier ist jeweils nur ein Streifen 31a, 31b dargestellt. Es entsteht ein erster Schnittpunkt 35.

Eine hier ebenfalls nicht dargestellte zweite Projektionsvorrichtung 12 wirft ein zweites Kalibriermuster 32 (strichpunktierte Linien) mit horizontalen Streifen 32a und vertikalen Streifen 32b, Auch hier ist jeweils nur ein Streifen 32a, 32b dargestellt. Es entsteht ein zweiter Schnittpunkt 36.

Ferner existiert ein Referenzmuster 40 (durchgezogene Linien), mit horizontalen Streifen 41a und vertikalen Streifen 41b. Es entsteht ein dritter Schnittpunkt 42. Das Referenzmuster 40 wird in dieser ersten Ausführungsform durch die Kameravorrichtung 15 definiert, da vorausgesetzt wird, dass die Kameraposition genau bekannt ist. Die Kameravorrichtung definiert, wo die Linien der Projektionsvorrichtungen 11, 12 auf der Projektionsfläche 1 liegen sollen.

In Fig. 3 ist anhand der Abstände der Schnittpunkte 35, 36 der Kalibriermuster 30 vom dritten Schnittpunkt 42 erkennbar, dass die erste Projektionsvorrichtung 11 zu weit rechts und zu weit oben, die zweite Projektionsvorrichtung 12 zu weit rechts und zu weit nach unten eingestellt ist.

Es ist das Ziel, dass die Schnittpunkte 35, 36 der projizierten Linien auf denselben Zielpunkt gezogen werden, der durch das kamerabestimmte Referenzmuster 40 bestimmt wird. Der Zielpunkt ist gemäß Fig. 3 der dritte Schnittpunkt 42.

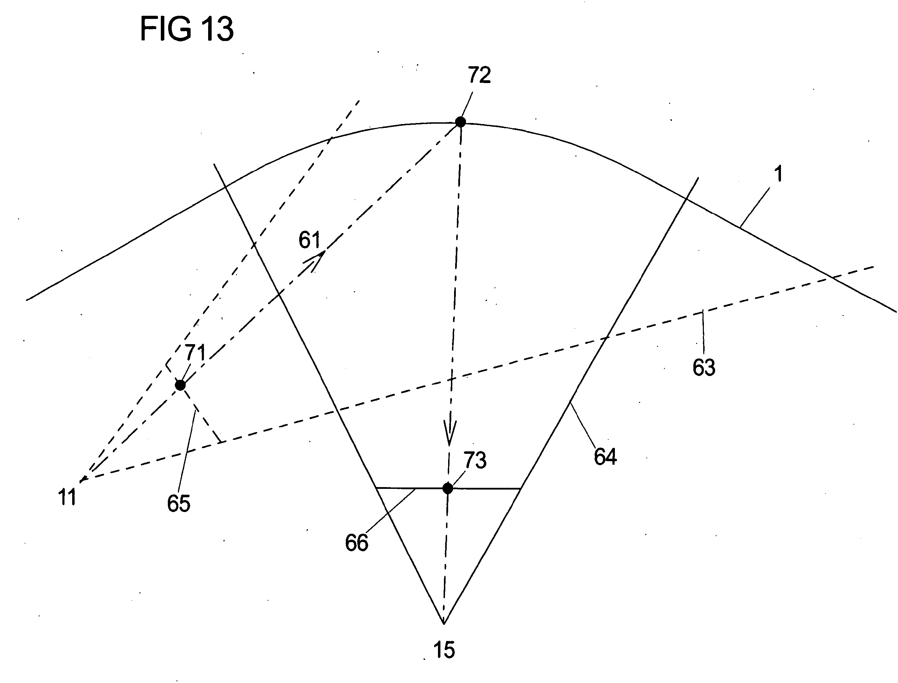

Dieses Ziel wird in der ersten Ausführungsform wie folgt erreicht, wobei auf die Fig. 13 Bezug genommen wird.

In Figur 13 ist eine Projektionsfläche 1 dargestellt, die von der ersten Projektionsvorrichtung 11 bestrahlt wird. Die Kameravorrichtung 15 betrachtet unter anderem einen Teil der von der ersten Projektionsvorrichtung 11 bestrahlten Projektionsfläche 1. Die erste Projektionsvorrichtung 11 spannt mit ihrem projizierten Bild ein Projektionsfrustum (eine Art Projektions-"Kegel") 63 auf (gestrichelte Linie). Das von der ersten Projektionsvorrichtung 11 zu projizierende Bild befindet sich in der zugeordneten Projektorbildebene 65.

Auch die Kameravorrichtung 15 spannt eine Art Sichtkegel 64 auf (durchgezogene Linie). Das von ihr fotografierte Bild liegt in der zugeordneten Kamerabildebene 66.

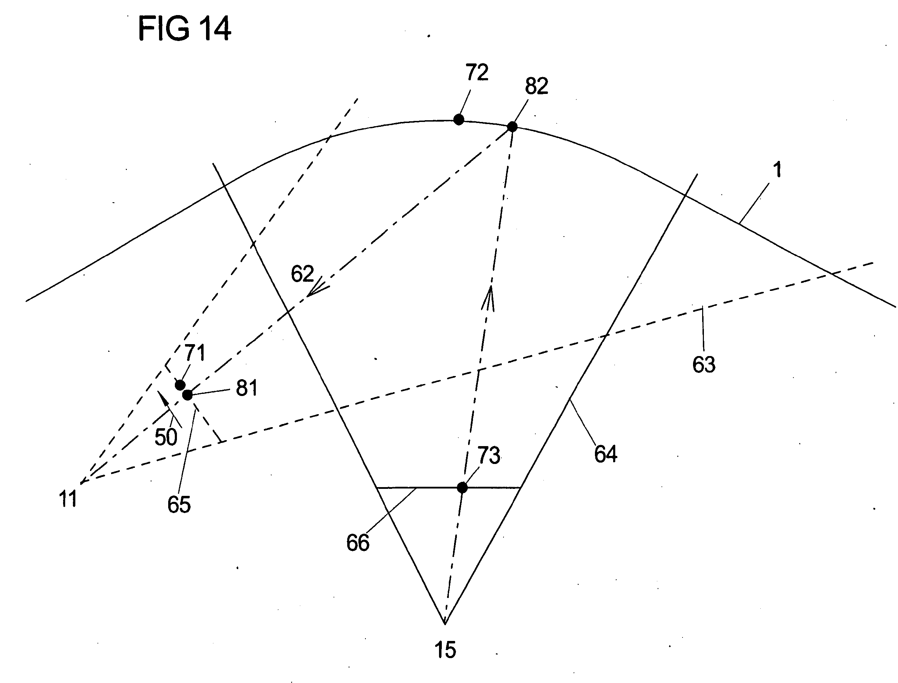

Bei der ersten Ausführungsform wird der in Fig. 13 dargestellte reale Aufbau und Strahlengang (dessen Parameter alle möglichst genau bekannt sind) in einem virtuellen Modell nachgebaut. Deswegen wird im Folgenden beschreiben, welche Schritte im realen Aufbau (siehe Fig. 13) durchgeführt werden, und welche Schritte im virtuellen Modell (siehe Fig. 14) simuliert werden.

Die erste Projektionsvorrichtung 11 wirft ein Kalibriermuster 30 mit einer großen Menge an Stützstellen (d.h. Schnittpunkten zwischen horizontalen und vertikalen Streifen (z.B. 31a, 31b, 32a, 32b in Fig. 3) im Realen auf die Projektionsfläche 1.

Anhand von Fig. 13 kann der Strahlengang 61 (strichpunktierte Linie) einer solchen Stützstelle verfolgt werden. Die Stützstelle liegt in der Projektorbildebene 65 im Punkt 71. Die Stützstelle befindet sich auf der Projektionsfläche 1 im Punkt 72. Die Kameravorrichtung 15 macht ein Bild. Auf dem Bild (in der Kamerabildebene 66) findet sich dieser Punkt an Stelle 73.

Nun gehen wir in das virtuelle Modell dieses Aufbaus gemäß Fig. 14. Wenn alles im Realen perfekt aufgestellt wäre (was nicht möglich ist), wäre das virtuelle Modell identisch mit dem realen Aufbau, d.h. die Schnittpunkte lägen genau übereinander.

Da der reale Aufbau aber nicht perfekt ist, gibt es leichte Unterschiede zwischen dem realen Aufbau und dem virtuellen Modell.

Es wird nun im Virtuellen aus der Kamera dieser Punkt 73 zurück "geschossen", d.h. rechnerisch ermittelt. Dies ist in Fig. 14 der Strahl 62 (strichpunktierte Linie).

Wäre der reale Aufbau perfekt, so würde dieser Strahl den Punkt 72 im Realen (d.h. in Fig. 13) auf der Projektionsfläche 1 treffen und schließlich wieder in Punkt 71 in der Projektorbildebene 65 ankommen.

Da aber der Aufbau nicht perfekt ist, wird statt Punkt 72 der Punkt 82 auf der virtuellen Projektionsfläche 1 getroffen und findet sich schließlich in Punkt 81 statt Punkt 71 in der Projektorbildebene 65. Dies bedeutet, dass die Kameravorrichtung 15 in ihrer Bildebene 66 an der Stelle 73 eigentliche eine Stützstelle aus dem Projektorbildebenenpunkt 81 erwartet hätte und nicht aus dem Projektorbildebenenpunkt 71.

Nun werden die Stützstellen (und damit letztlich die zu projizierenden Bildinhalte) in der Projektorebene 65 so verschoben, dass das real von der Projektionsvorrichtung 11 geworfene Bild genau da auftrifft, wo die Kameravorrichtung 15 es verlangt.

Im Realen wurde Punkt 71 projiziert und es wurde ermittelt, dass der Punkt 71 in der Kamerabildebene 66 als Punkt 73 ankommt. In Punkt 73 allerdings soll aber (laut dem perfekten virtuellen Modell) den Bildpunkt 81 aus der Projektorbildebene liegen.

Die Korrekturtransformation 50 besteht nun (für diese Stützstelle) darin, dass in der Projektorbildebene 65 der Bildinhalt (die Stützstelle) von Punkt 81 auf Punkt 71 transformiert wird. Denn bei Punkt 71 im Projektorbildraum wissen wir, dass er im Realen in der Kamerabildebene 66 bei Punkt 73 ankommt. So wird also der Bildinhalt, der sich eigentlich bei Punkt 81 befand, nach Anwendung der Korrekturtransformation 50 bei Punkt 71 projiziert und landet auf der Projektionsfläche 1 an Punkt 72, und landet schließlich in der Kameravorrichtung 15 an Punkt 73 - genau dort, wo er sein sollte.

In der Recheneinheit wird ein rechnerischer Zusammenhang als Korrekturtransformation 50 gebildet, die die Stützstellen 35, 36 des Kalibrierbildes in die Stützstellen des Referenzbildes 37 verschiebt. Der rechnerische Zusammenhang kann als Funktion, Tabelle oder Parameter ausgebildet sein. Besonders vorteilhaft ist es, wenn ein sogenanntes Mesh verwendet wird, das keine analytische Beschreibung der Transformation voraussetzt. Das Mesh ist eine Art Gitterstruktur, die auf das Projektorbild wirkt, bestehend aus einer bestimmten Anzahl von Stützpunkten. Die beschriebenen nötigen Verschiebungen einzelner Punkte im Projektorbild werden hierbei auf die dazugehörigen Stützpunkte des Meshes angewendet, woraufhin das Projektorbild in gewünschter Weise verzerrt wird.

Durch diese Transformation kann im gesamten Überlappungsbereich 2 eine Korrektur erfolgen. Die Korrekturtransformation 50 ist z.B. in Form einer Tabelle implementiert. In Fig. 3 ist die Korrekturtransformation 50 aus Gründen der Übersichtlichkeit nur für ein Paar von Stützstellen dargestellt. Grundsätzlich kann die Korrekturtransformation 50 aber auch auf beliebig viele Stützstellen angewandt werden.

Dieser Vorgang wird für viele verschiedene Stützstellen der Projektorbildebene durchgeführt. Diese Stützstellen spannen ein Netz auf, das die gesamte Projektorbildebene abdeckt, z.B. ein Netz aus 100 mal 100 gleichmäßig verteilten Stützstellen. Nach Verschiebung aller Stützstellen dieser Projektionsvorrichtung 11 an die korrigierten Positionen ist das gesamte Projektorbild genau an die Stelle verschoben, wo es für die Kameravorrichtung sein sollte.

Nun können noch eine zweite, dritte und ggf. noch weitere Projektionsvorrichtungen 11, 12, 13 hinzu kommen. Deren projizierte Bilder werden genauso wie das der ersten Projektortionsvorrichtung 11 genau an die Stellen gezogen, wo diese auf Grund der von der Kameravorrichtung (laut dem perfekten virtuellen Modell) ermittelten Information liegen sollten. Da im virtuellen Modell die Bildinhalte zweier Projektoren exakt aufeinander liegen, liegen sie nach der Kalibrierung nun auch im Realen aufeinander.

Nicht in den Fotos erkannte Stützstellen des Projektorbildraums werden interpoliert bzw. extrapoliert.

Bei der zweiten Ausführungsform werden die Parameter der Kameravorrichtung 15 nicht verwendet, d.h. sie müssen vorab auch nicht bekannt sein. Es ist dann aber vorteilhaft, wenn die Projektionsvorrichtungen 11, 12 allerdings manuell gut justiert sind. Die Wirkungsweise der zweiten Ausführungsform wird anhand der Fig. 4 erläutert, wobei hier grundsätzlich die gleichen Kalibriermuster 30 verwendet werden, wie bei der ersten Ausführungsform (Fig. 3). Daher kann auf die entsprechende Beschreibung der ersten Ausführungsform Bezug genommen werden. Allerdings werden die Kalibriermuster der zweiten Ausführungsform vorverzerrt, so dass sie an die Form der Projektionsfläche 1 angepasst sind (z.B. ein Kugelkoordinatensystem für eine kugelförmige Projektionsfläche).

In der zweiten Ausführungsform sind die Parameter der Kameravorrichtung 15 unbekannt, das heißt, hier gibt es keine Kameravorrichtung, die eine Referenz für die Projektionsvorrichtung 11, 12 geben kann.

Stattdessen müssen die Projektionsvorrichtungen 11, 12 per Hand möglichst gut vorjustiert werden. Mittels der zweiten Ausführungsform des erfindungsgemäßen Verfahrens sollen die letzten verbleibenden Unterschiede reduziert oder korrigiert werden, indem sie bei "Nicht-Aufeinanderliegen" der Bildinhalte zweier Projektionsvorrichtungen 11, 12 im Überlappungsbereich 2 eine Art Kompromiss bildet und die überlappenden Projektorbildinhalte zur Deckung bringen. Dies ist beispielhaft in Fig. 4 dargestellt, wobei analog zur Fig. 3 nur ausgewählte Teile eines Kalibriermusters dargestellt sind.

Dabei wirft eine hier nicht dargestellte erste Projektionsvorrichtung 11 ein erstes Kalibriermuster 31 (gestrichelte Linien) mit horizontalen Streifen 31a und vertikalen Streifen 31b. Hier ist jeweils nur ein Streifen 31a, 31b dargestellt. Es entsteht ein erster Schnittpunkt 35.

Eine hier ebenfalls nicht dargestellte zweite Projektionsvorrichtung 12 wirft ein zweites Kalibriermuster 32 (strichpunktierte Linien) mit horizontalen Streifen 32a und vertikalen Streifen 32b. Auch hier ist jeweils nur ein Streifen 32a, 32b dargestellt. Es entsteht ein zweiter Schnittpunkt 36.

Der erste Schnittpunkt 35 der ersten Projektionsvorrichtung 11 und der zweite Schnittpunkt 36 der zweiten Projektionsvorrichtung 12 sollten eigentlich aufeinander liegen. Es wird nun ein Zielpunkt 42 als Kompromiss definiert, nämlich als Mittelwert zwischen diesen beiden Schnittpunkten 35, 36.

Damit die Stützstellen im Projektorbildraum auch tatsächlich diese Mittelwerte erreichen, muss aus den Punktverschiebungen im Kamerabildraum auf die Punktverschiebungen im Projektorbildraum geschlossen werden. Dies ist möglich über die Nachbar-Stützstellen der jeweiligen Stützstelle im Projektorbildraum, für die ja auch die zugehörigen Punkte im Kamerabildraum zur Verfügung stehen.

Der erste Schnittpunkt 35 und der zweite Schnittpunkt 36 sollen auf den Zielpunkt 42 verschoben werden.

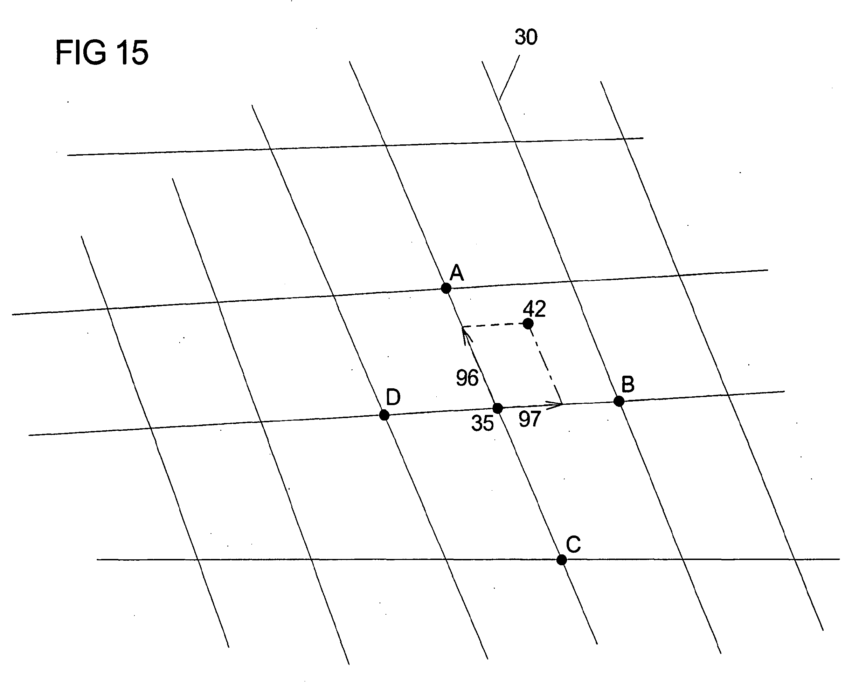

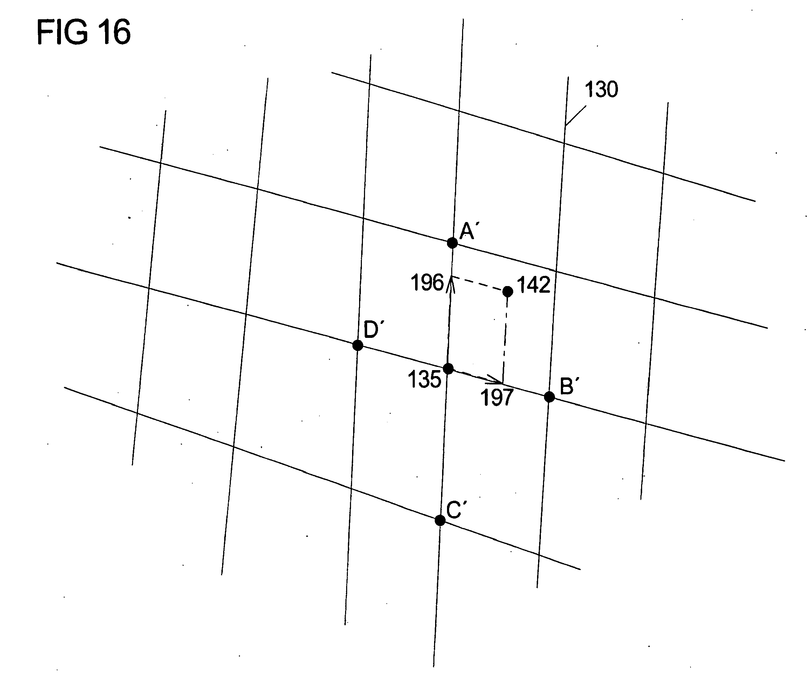

All diese Punkte befinden sich in der Kamerabildebene (siehe Fig. 15 für eine Darstellung des Kamerabildraumes). In Fig. 16 ist der dazugehörige Projektorbildraum dargestellt.

Für den ersten Schnittpunkt 35 der Kamerabildebene (siehe Fig. 15) ist der ursprünglichen Punkt 135 in der Projektorbildebene des ersten Projektionsvorrichtung 11 (siehe auch Figur 16) bekannt.

Auch für den zweiten Schnittpunkt 36 der Kamerabildebene ist der ursprüngliche Punkt in der Projektorbildebene der zweiten Projektionsvorrichtung 12 bekannt.

Zunächst nicht bekannt ist der zum Zielpunkt 42 gehörige, im Kamerabildraum liegende ursprüngliche Punkt im Projektorbildraum (Punkt 142 für die erste Projektionsvorrichtung 11).

Diesen gilt es für jede Projektionsvorrichtung 11, 12 und für jede Stützstelle zu ermitteln. Wir betrachten im Folgenden die Berechnung für die erste Projektionsvorrichtung 11. Die Berechnung für die zweite Projektionsvorrichtung 12 erfolgt analog.

Die Figur 15 zeigt den Kamerabildraum. Dargestellt ist ein Kalibiermuster 30 der ersten Projektionsvorrichtung 11 mit horizontalen und vertikalen Streifen 31, der ersten Stützstelle 35 und dem Zielpunkt 42 für die erste Stützstelle 35. Des Weiteren sind die Nachbarpunkte A, B, C, D der ersten Stützstelle 35 eingezeichnet.

Die Fig. 16 zeigt dasselbe Bild wie in Fig. 15, allerdings im Projektorbildraum der ersten Projektionsvorrichtung 11. Dargestellt sind die horizontale und vertikale Streifen, die Stützstelle 135 und der Zielpunkt 142 für die Stützstelle 135. Des Weiteren sind die Nachbarn A', B', C', D' der Stützstelle 135 eingezeichnet.

Da das Projektorbild im Allgemeinen schief auf gekrümmte Projektionsfläche 1 geworfen wird und aus einem unbekannten Winkel aufgenommen wird, unterscheidet sich im Allgemeinen das Bild im Kamerabildraum (Nach der Projektion, Figur 15) deutlich von dem selbem Bild (vor der Projektion, Figur 16): Es ist verdreht, verschoben, gekrümmt, verzerrt, etc..

Nun gilt es, die Position von 142 (im Projektorbildraum) zu bestimmen. Diese wird benötigt, damit man nach der Projektion an dieser Stelle den (Ziel-)Punkt 42 im Kamerabildraum trifft. Denn wenn die Korrekturtransformation im Projektorbildraum die Stützstelle 135 genau an die Stelle 142 verschiebt, so wird anschließend im Kamerabildraum diese Stützstelle auf der 42 zu liegen kommen. Dies ist genau das Ziel.

Im Folgenden wird die Bestimmung der Pixelkoordinaten von Punkt 142 beschrieben.

Die Positionen der Stützstellen im Projektorbildraum 135, A', B', C', D' sind bekannt, da diese in den Kalibriermustern 30 selbst festgelegt sind.

Auch Schnittpunkte 35, A, B, C, D im Kamerabildraum sind bekannt, da diese Stützstellen im Foto wieder erkannt wurden (z.B. durch die farbkodierte Lichtschnitttechnik). Der Zielpunkt 42 im Kamerabildraum ist bekannt, da er als Mittelwert der Punkte mehrerer Projektoren berechnet wurde. Dieser berechnete Zielpunkt 42 dient als Referenzwert. Wird die Berechnung für viele Schnittpunkte durchgeführt, erhält man ein Referenzmuster.

Nun wird der Zielpunkt 142 im Projektorbildraum berechnet mit Hilfe der Nachbarstützstellen.

Im Beispiel der Fig. 15 ist dargestellt, dass man von Punkt 35 ausgehend zum Punkt 42 gelangen kann, wenn wir 70% des Weges in Richtung des Punktes A gehen (das ist der Pfeil 96) und dann 50% des Weges von Punkt 35 zu Punkt B gehen (das ist der Pfeil 97, bzw. die gestrichelte parallel verschobene Kopie des Pfeils 97).

Diese Berechnung des Zielpunktes 42 aus der Stützstelle 35 und seinen zwei Nachbarn A, B wird im Kamerabildraum in den Projektorbildraum transformiert, um den Zielpunkt 142 zu berechnen.

Auch geht man von der Stützstelle 135 aus, geht dann (in gleichem Maße wie im Kamerabildraum) ein Stück in Richtung Punkt A' (nämlich 70% des Weges in diesem Beispiel, Pfeil 196) und legt dann (in gleichem Maße wie im Kamerabildraum) ein Stück des Weges von Punkt 135 zu Punkt B' zurück (nämlich 50% des Weges in diesem Beispiel, Pfeil 197). Damit gelangt man zu den Koordinaten des Zielpunktes 142. Damit kann dann die Stützstelle 135 in den Zielpunkt 142 verschoben werden, woraufhin - wie gewünscht - der Bildinhalt, der sich im Projektorbild an Stützstelle 135 befunden hatte, im Kamerabildraum an Stelle 42 erscheinen wird und nicht mehr an Stelle 35.

Die Korrekturtransformation 50 setzt sich hier aus den durch die Pfeile symbolisierten Verschiebungen zusammen.

Diese Berechnung wird, wie bei Variante A, für ein Gitternetz aus Stützpunkten, das das Projektorbild abdeckt, ausgeführt. Anschließend liegt das gesamte Bild dieses Projektors im Kamerabildraum mit seinen Stützpunkten auf den "Kompromiss"-Stützpunkt-Positionen. Da diese Kalibrierung für jeden Projektor durchgeführt wird, liegen die Projektoren anschließend im Überlappbereich aufeinander.

Der "Mittelwert" muss vorteilhafterweise allerdings gewichtet werden, damit keine Sprünge / Knicke in den Projektorbildern entstehen. Eine sinnvolle Gewichtung wäre z.B.: in der Nähe der Projektorbildmitte hohes Gewicht. In der Nähe des Projektorrandes: niedriges Gewicht.

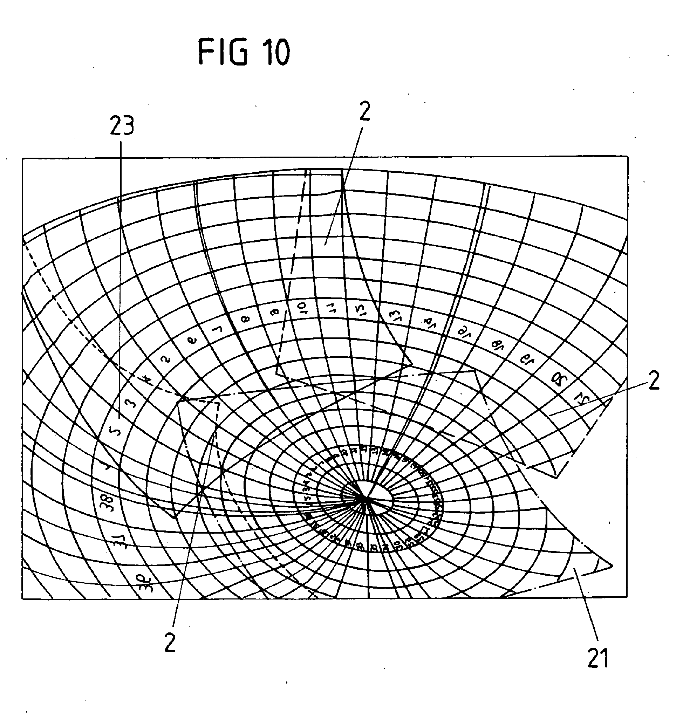

Die zweite Ausführungsform wird auch im Zusammenhang mit den Fig. 9 und 10 beschrieben. Dabei ist die Projektionsfläche 1 eine Kugelschale, in die von oben mittels mehrerer, hier nicht dargestellter Projektionsvorrichtungen mehrere Teilbilder 21, 22, 23 projiziert werden. Auf Grund der doppelten Linien in Fig. 9 ist ersichtlich, dass hier in den Überlappungsbereichen 2 keine gute Abstimmung vorliegt. Nachdem das Verfahren gemäß der zweiten Ausführungsform durchgeführt wurde, wird das Ergebnis gemäß Fig. 10 erreicht. Die Teilbilder 21, 22, 23 liegen nun im Wesentlichen korrekt aufeinander.

Bei der dritten Ausführungsform sind weder die Parameter der Kameravorrichtung 15 bekannt, noch sind die Projektionsvorrichtungen 11, 12 vorjustiert.

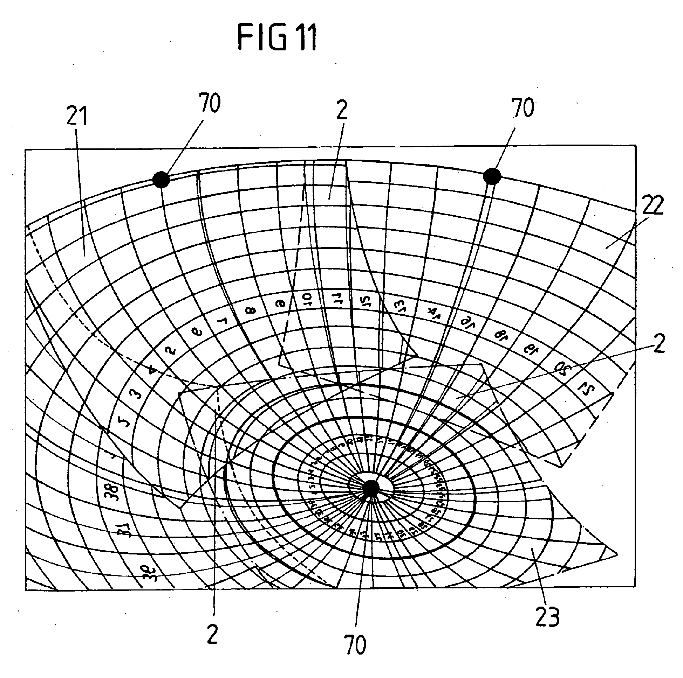

Von der Projektionsfläche 1 (z.B. eine Kuppel wie in Fig. 5) ist ein virtuelles 3-D-Modell bekannt, das in der Recheneinheit 20 gespeichert ist. Ein konkretes Ausführungsbeispiel ist in Fig. 11 dargestellt, wobei die Projektionsfläche 1 eine Kugelschale ist, in die mehrere Teilbilder 21, 22, 23 projiziert werden.

An der Projektionsfläche 1 sind mehrere Marker 70 (LEDs, Laserpointer) an wohldefinierten Punkten angebracht; zwei am Rand, einer im Zenit.

Da die Kameravorrichtung 15 nicht die gesamte Kuppel 1 mit den Markern aus einer Ansicht aufnehmen kann, wird die Kalibrierung segmentweise durchgeführt. Nehmen wir an, die Kuppelprojektion besteht aus sechs Projektionsvorrichtungen 11, 12 (fünf für das Panorama und einer für den Zenit). Die Marker 70 wären in diesem Fall beispielsweise im Zenit und am Rand alle 72° angeordnet. Bei der Aufnahme durch die Kameravorrichtung 15 muss darauf geachtet werden, dass jeweils zwei Randmarker 70 und der Zenitmarker 70 im Bild der Kamera sind, damit eine Zuordnung möglich ist. Im Fall der Kuppel spannen die Marker 70 ein sphärisches Dreieck auf.

Damit kann ein 72°-Segment des 3-D-Modells der Kuppel über geometrische Transformation (perspektivische Transformation, Rotation, Translation, Scherung, Linsenverzerrung,...) in die Fotos der echten Kuppel gemappt werden. In diesem virtuellen Segment sind Referenzlinien enthalten (beispielsweise alle 5°).

Anschließend werden für jede Projektionsvorrichtung 11, 12 des aktuell betrachteten Segments Kalibriermuster 30 projiziert, welche mit diesen Referenzlinien verglichen werden, so dass für jeden Teilprojektor 11, 12 die Pixelverschiebung bestimmt werden kann. Werden alle Teilprojektoren per Imagewarping auf diese Referenzmuster abgeglichen, ist ein Teilsegment kalibriert. Diese Kalibrierung erfolgt analog für die restlichen Teilsegmente. Da diese Teilsegmente dasselbe 3-D-Referenzmodell zur Basis haben, passen die unabhängig voneinander kalibrierten Segmente nahtlos aneinander.

Es empfiehlt sich, dass der Überblendbereich der Projektoren in etwa mittig eines Teilsegmentes ist, so dass die Segmente nicht im Überblendbereich aneinander stoßen, da dies ein Blending zwischen den Projektoren erschweren würde. Die Verzerrung und die Helligkeitskorrektur (Blending) erfolgt analog des in der DE 102 51 217 beschriebenen Verfahrens zur Multiprojektorkalibrierung.

Im Folgenden werden nochmals die Gemeinsamkeiten aller drei Ausführungsformen beschrieben.
1. Aufstellung: In jeder Ausführungsform geht mindestens ein Teil der Informationen über die Aufstellung der Hardware mit ein: Größe und Form der Projektionsfläche 1, Position und Ausrichtung der Kameravorrichtung 15 und/oder Position und Ausrichtung der Projektionsvorrichtungen 11, 12.
2. Kalibriermuster: Die Projektionsvorrichtungen 11, 12 werfen Kalibrierungsmuster 30 auf die Projektionsfläche 1.
3. Aufnahme Kalibrierbild: Die Kameravorrichtung 15 fotografiert diese Kalibrierungsmuster 30 und Generierung eines Kalibrierbildes zur rechnerischen Weiterverarbeitung. Die Kameravorrichtung kann z.B. eine bewegliche Kamera aufweisen, die umgestellt wird oder mehrere feste Kameras. Auch eine Panoramakamera oder Fisheye-Kamera kann verwendet werden. Ggf. wird zur Entfernung von Störungslicht ein Schwarzbild aufgenommen.
4. Abgleich Referenzmuster: Die aus den Aufnahmen der Kalibrierbilder extrahierten Informationen werden abgeglichen mit einem Referenzmuster 40, einer Art "Vorlage" für das gewünschte, möglichst makellose Bild
5. Erzeugung Korrekturtransformation: Aus dem Abgleich mit dem Referenzmuster 40 wird eine Verzerrungsvorschrift berechnet, eine Korrekturtransformation 50. Diese Verzerrungsvorschrift wird auf das Projektorbild angewendet, woraufhin das Gesamtbild korrigiert wird und die beobachteten Fehler verschwinden. Die hierbei nötigen Transformationen müssen nicht mit normalen mathematischen Funktionen beschreibbar sein. Vorteilhafterweise wird das oben beschriebene "Mesh" für die Verzerrung verwendet.

Im Folgenden werden die jeweiligen Unterschiede der drei Ausführungsbeispiele zum allgemeinen Vorgehen erläutert, wobei auf die fünf zuvor genannten Kategorien Bezug genommen wird.

### Erste Ausführungsform

### 1. Aufstellung

- Geometrie der Darstellungsfläche muss bekannt sein
- Geometrie der Projektoren muss bekannt sein
- Geometrie der Kamera muss bekannt sein

### 2. Kalibriermuster

- Es werden "normale", unverzerrte Muster mit den Projektoren projiziert 4. Abgleich Referenzmuster: Es wird der gesamte Aufbau (Projektionsfläche 1, Projektionsvorrichtungen 11, 12, Kameravorrichtungen 15) in der Recheneinheit 15 des Systems im Virtuellen nachmodelliert. Die Projektionsvorrichtungen werfen definierte Kalibriermuster 30 und die Kameras nehmen Fotos auf. Die Recheneinheit erkennt die Kalibriermuster 30 der Projektorbilder in den Aufnahmen wieder und hat dadurch eine Vielzahl von Stützstellen im Projektorbildraum mit eindeutiger Zuordnung im Kamerabildraum.

### Zweite Ausführungsform

1. Aufstellung:
   - Geometrie der Darstellungsfläche muss bekannt sein
   - Geometrie der Projektoren muss bekannt sein. Die Projektoren sollten schon möglichst gut manuell justiert sein.
   - Geometrie der Kamera muss nicht bekannt sein
2. Kalibrierungsmuster: Es werden vorverzerrte Muster mit den Projektionsvorrichtungen 11, 12 projiziert. Das heißt, sie sind bereits an die Geometrie der Projektionsfläche 1 angepasst. Dies ist nötig, damit es Stützpunkte gibt, die in jeweils zwei überlappenden Projektorbildern an exakt derselben Stelle auf der Darstellungsfläche liegen sollen. Dies ist nicht gegeben bei unverzerrten Mustern, die im Projektorbildraum symmetrisch angeordnet sind (z.B. horizontale / vertikale Streifen mit festem Abstand zueinander).
4. Abgleich mit Referenzmuster: Für bestimmte Stützstellen werden Punkte / Linien im Überlappbereich projiziert, deren Projektion der einzelnen Projektoren aufeinander liegen sollten.

### Dritte Ausführungsform

### 1. Aufstellung

- Geometrie der Darstellungsfläche muss bekannt sein
- Auf der Projektionsfläche sind n Marker in wohldefinierten Abständen angebracht (LEDs, Laserpointer o.ä.)
- Parameter der Projektoren müssen NICHT bekannt sein.
- Parameter der Kamera müssen NICHT bekannt sein

2. Kalibrierungsmuster: Es werden "normale", unverzerrte Kalibriermuster 30 mit den Projektionsvorrichtungen 11, 12 projiziert. Da es sein kann, dass die Kalibriermuster 30 nicht vollständig von der Kameravorrichtung 15 erfasst werden können, kann die farbkodierte Lichtschnitttechnik bzw. die Projektion von Mittelstreifen als Referenz verwendet werden.

3. Aufnahme Kalibrierbild: Aufnahme eines Markerbildes zur späteren Zuordnung der uv-Koordinaten.

4. Abgleich mit Referenzmuster: Das vorbekannte 3-D-Modell der Projektionsfläche 1 wird mithilfe der zuvor erkannten Marker als Referenzmuster in die Aufnahmen der Kalibriermuster gemappt. Dies geschieht mit bekannten Verfahren der Computergrafik (perspektivische Transformation, Translation, Rotation, Scherung, Linsenverzerrung,...). Die uv-Koordinaten bestimmter Punkte oder Linien in diesem 3-D-Modell sind bekannt (die Genauigkeit kann vom Benutzer festgelegt werden) und werden zum Abgleich zwischen Referenz und Projektion verwendet. Die gefilterten, projizierten Kalibriermuster 30 werden nun mit diesen Referenzkoordinaten verglichen. Für jeden Punkt des Kalibriermusters (z.B. im Raster 20 x 20 Pixel) wird über die bekannten Referenzkoordinaten eine dazugehörige uv-Koordinate bestimmt (Imagewarping, siehe DE 102 51 217 A1). Diese uv-Koordinaten mit dazugehörigen Positionen im Framebuffer werden für die Echtzeitverzerrung der Projektion benötigt und zur weiteren Echtzeitverarbeitung gespeichert. Aus sich überlappenden Kalibriermustern ist das Blending zwischen einzelnen Projektoren berechenbar. Diese Daten werden ebenfalls für die spätere Echtzeitentzerrung gespeichert. Die Kalibrierung wird - insbesondere bei einer Kuppel - pro Segment (z.B. 72°/90°) durchgeführt. Da jedes Segment dasselbe 3-D-Referenzmodell zur Grundlage hat, ist das Ergebnis eine in sich stimmende globale Kalibrierung, welche aus mehreren lokal kalibrierten Segmenten zusammengesetzt ist.

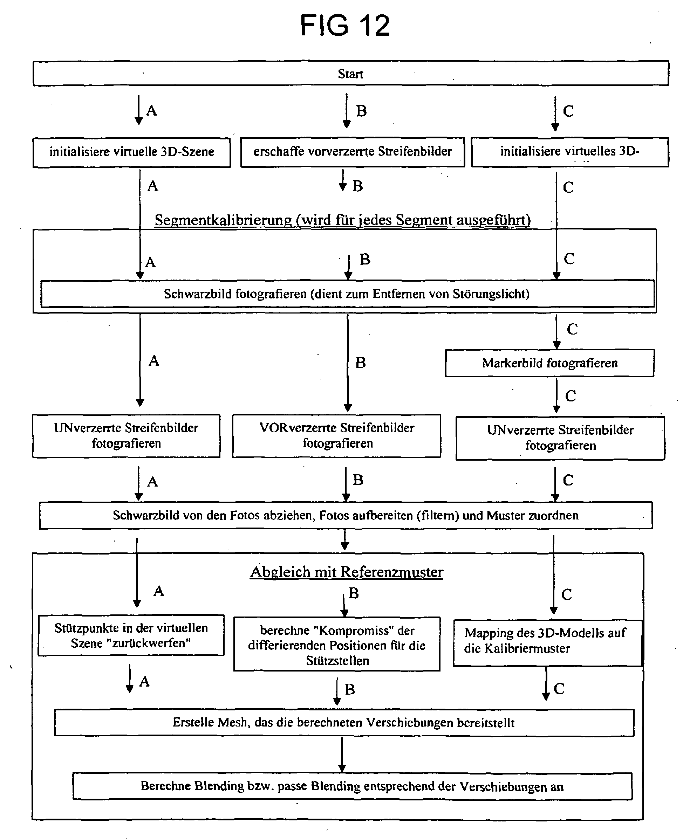

Die Unterschiede und Gemeinsamkeiten der drei Ausführungsformen sind in Fig. 12 dargestellt, wobei die erste Ausführungsform mit A, die zweite mit B und die dritte mit C bezeichnet wird.

Es sei angemerkt, dass die drei Ausführungsformen untereinander kombinierbar sind, d.h. für unterschiedliche Punkte in einem Überlappungsbereich oder für unterschiedliche Überlappungsbereiche wird jeweils eine andere Ausführungsform verwendet. Damit sind die Stärken der einzelnen Verfahren miteinander kombinierbar.

Die Erfindung beschränkt sich in ihrer Ausführung nicht auf die vorstehend angegebenen bevorzugten Ausführungsbeispiele. Vielmehr ist eine Anzahl von Varianten denkbar, die von dem erfindungsgemäßen Kalibrierverfahren und Kalibriersystem auch bei grundsätzlich anders gearteten Ausführungen Gebrauch machen.

### Bezugszeichenliste

- 1: Projektionsfläche
- 2: Überlappungsbereich

- 11: erste Projektionsvorrichtung
- 12: zweite Projektionsvorrichtung
- 13: dritte Projektionsvorrichtung

- 15: Kameravorrichtung

- 20: Rechnereinheit
- 21: erstes Teilbild
- 22: zweites Teilbild
- 23: drittes Teilbild

- 30: Kalibriermuster
- 31, 31a, 31b: erstes Kalibriermuster
- 32, 32a, 32b: zweites Kalibriermuster

- 35: erster Schnittpunkt
- 36: zweiter Schnittpunkt

- 40: Referenzmuster
- 41a, 41b: Referenzlinien
- 42: dritter Schnittpunkt (Fig. 3), Zielpunkt (Fig.4)

- 50: Korrekturtransformation

- 62: Strahl im virtuellen Modell
- 63: Projektionskegel
- 64: Sichtkegel
- 65: Projektorbildebene
- 66: Kamerabildebene

- 70: Marker
- 71, 72, 73: Punkte im realen Strahlengang (Fig. 13)
- 81, 82: Punkte im virtuellen Strahlengang (Fig. 14)
- 96, 97: Verschiebungen im Kamerabildraum (Fig. 15)
- 135: Schnittpunkt im Projektorbildraum (Fig. 16)
- 142: Zielpunkt im Projektorbildraum (Fig. 16)
- 196, 197: Verschiebungen im Projektorbildraum (Fig. 16)
- A,B,C,D: Nachbarpunkte im Kamerabildraum (Fig. 15)
- A',B',C',D': Nachbarpunkte im Projektorbildraum (Fig. 16)

## Patentansprüche

1. Kalibrierungsverfahren für mindestens eine Projektionsvorrichtung (11, 12, 13) für die Projektion von Bildern auf mindestens eine Projektionsfläche (1), wobei die geometrischen Daten der mindestens einen Projektionsfläche (1) in einer Rechnereinheit (20) vorab gespeichert sind oder werden, wobei
a) die mindestens eine Projektionsvorrichtung (11, 12, 13) vorbekannte Kalibriermuster (30) auf mindestens einen Teil der Projektionsfläche (1) projiziert,
b) die Kalibriermuster (30) von mindestens einer Kameravorrichtung (15) als Kalibrierbild aufgenommen werden und die Daten des Kalibrierbildes an die Rechnereinheit (20) übertragen werden, wobei
c) mittels der Rechnereinheit (20) automatisch die Abweichung zwischen dem aufgenommenen realen Kalibrierbild und einem idealen Abbildungsergebnis des vorbekannten Kalibriermusters (30) auf der Projektionsfläche (1) als Referenzmuster (40) ermittelt wird, wobei hierzu der reale Aufbau der Projektionsfläche (1), der mindestens einen Projektionsvorrichtung (11, 12, 13) und der Kameravorrichtung (15) in einem virtuellen Modell anhand der bekannten Geometrie der Projektionsfläche (1), der mindestens einen Projektionsvorrichtung (11, 12, 13) und der Kameravorrichtung (15) modelliert wird, wobei anschließend
d) die Rechnereinheit (20) aus der Abweichung zwischen realem Kalibrierbild und dem Referenzmuster (40) eine Korrekturtransformation (50) ermittelt, so dass die Verknüpfung der Korrekturtransformation (50) mit einer realen Projektion von Bildern durch die mindestens eine Projektionsvorrichtung (11, 12, 13) insbesondere in einem Überlappungsbereich (2, 2', 2") mehrerer Bilder bis auf eine kleine, insbesondere minimale Abweichung dem Referenzmuster (40) entspricht, wobei die Korrekturtransformation (50) eine Verschiebung mindestens eines Punktes (31, 32, 33, 34) des real aufgenommenen Kalibrierbildes auf einen Punkt (41, 42, 43, 44) des Referenzmusters (40) aufweist.

2. Kalibrierungsverfahren nach mindestens einem der vorhergehenden Ansprüche, **dadurch gekennzeichnet, dass** überlappende Projektionen mindestens zweier Projektionsvorrichtungen (11, 12, 13) durch die Minimierung der Abweichung zum Referenzmuster (40) so ausgerichtet werden, dass keine Diskontinuitäten im Überlappungsbereich (2, 2', 2") sichtbar sind.

3. Kalibrierungsverfahren nach mindestens einem der vorhergehenden Ansprüche, **dadurch gekennzeichnet, dass** die Projektionsfläche (1) mindestens teilweise eine Kugelschale, eine Zylinderschale und / oder eine ebene Fläche aufweist.

4. Kalibrierungsverfahren nach mindestens einem der vorhergehenden Ansprüche, **dadurch gekennzeichnet, dass** die Kameravorrichtung (15) mindestens eine Digitalkamera, mindestens eine Videokamera, mindestens eine Fish-Eye Kamera und / oder mindestens eine Webcam aufweist.

5. Kalibrierverfahren nach mindestens einem der vorhergehenden Ansprüche, **dadurch gekennzeichnet, dass** mindestens eine Kameravorrichtung (15) zur Aufnahme eines Bildes von der Projektionsfläche (1) um mindestens eine Achse drehbar gelagert ist.

6. Kalibriervorrichtung nach mindestens einem der vorhergehenden Ansprüche, **dadurch gekennzeichnet, dass** mindestens eine Projektionsvorrichtung (11, 12) mindestens einen Beamer, Laserprojektor, LCD-Projektor und / oder DLP-Projektor aufweist.

7. Kalibrierungsverfahren nach mindestens einem der vorhergehenden Ansprüche, **dadurch gekennzeichnet, dass** mindestens ein Kalibriermuster (30) ein Streifenmuster ist, bei dem einzelne Streifen parallel zueinander angeordnet sind.

8. Kalibrierungsverfahren nach mindestens einem der vorhergehenden Ansprüche, **dadurch gekennzeichnet, dass** mindestens ein Kalibriermuster (30) gekrümmte, vorverzerrte, einfarbige, mehrfarbige und / oder farbcodierte Streifen aufweist und / oder ein Punktmuster aufweist.

9. Kalibrierverfahren nach mindestens einem der vorhergehenden Ansprüche, **dadurch gekennzeichnet, dass** vor der Auswertung einer Aufnahme mindestens eines Kalibriermusters (30) die Kameravorrichtung (15) ein Schwarzbild aufnimmt.

10. Kalibrierverfahren nach mindestens einem der vorhergehenden Ansprüche, **dadurch gekennzeichnet, dass** im Überlappungsbereich (2, 2', 2") ein Blending zur Anpassung der Helligkeitswerte vorgenommen wird.

11. Kalibrierungsverfahren nach mindestens einem der vorhergehenden Ansprüche, **dadurch gekennzeichnet, dass** in Abhängigkeit von der Korrekturtransformation (50) mindestens eine räumliche Orientierung mindestens einer Projektionsvorrichtung (11, 12, 13) automatisch verändert wird.

12. Kalibrierungsverfahren nach mindestens einem der vorhergehenden Ansprüche, **dadurch gekennzeichnet, dass** Parameter der Kameravorrichtung (15) automatisch ermittelt werden, indem eine Aufnahme eines vorbekannten Musters, insbesondere eines Markermusters auf der Projektionsfläche (1) aufgenommen wird und das Rechenmittel (20) daraus die Parameter berechnet.

13. Kalibrierungssystem mit mindestens einer Projektionsvorrichtung (11, 12, 13) für die Projektion von Bildern auf mindestens eine Projektionsfläche (1), wobei die geometrischen Daten der mindestens einen Projektionsfläche (1) in einer Rechnereinheit (20) vorab gespeichert sind oder werden, wobei
a) die mindestens eine Projektionsvorrichtung (11, 12, 13) zur Projektion vorbekannter Kalibriermuster (30) auf mindestens einen Teil der Projektionsfläche (1) eingerichtet ist,
b) mindestens eine Kameravorrichtung (15) eingerichtet ist zur Aufnahme der Kalibriermuster (30) als Kalibrierbild, wobei die Daten des Kalibrierbildes an die Rechnereinheit (20) übertragbar sind und
c) die Rechnereinheit (20) eingerichtet ist zur automatischen Ermittlung der Abweichung zwischen dem aufgenommenen realen Kalibrierbild und einem idealen Abbildungsergebnis des vorbekannten Kalibriermusters (30) auf der Projektionsfläche (1) als Referenzmuster (40), wobei hierzu der reale Aufbau der Projektionsfläche (1), der mindestens einen Projektionsvorrichtung (11, 12, 13) und der Kameravorrichtung (15) in einem virtuellen Modell anhand der bekannten Geometrie der Projektionsfläche (1), der mindestens einen Projektionsvorrichtung (11, 12, 13) und der Kameravorrichtung (15) modelliert wird, und
d) ein Korrekturmittel eingerichtet ist zur Ermittlung einer Korrekturtransformation (50) aus der Abweichung zwischen realem Kalibrierbild und dem Referenzmuster (40), so dass die Verknüpfung der Korrekturtransformation (50) mit einer realen Projektion von Bildern durch die mindestens eine Projektionsvorrichtung (11, 12, 13) insbesondere in einem Überlappungsbereich (2, 2', 2") mehrerer Bilder bis auf eine kleine, insbesondere minimale Abweichung dem Referenzmuster (40) entspricht, wobei die Korrekturtransformation (50) eine Verschiebung mindestens eines Punktes (31, 32, 33, 34) des real aufgenommenen Kalibrierbildes auf einen Punkt (41, 42, 43, 44) des Referenzmusters (40) aufweist.

## Claims

1. Calibration method for at least one projection device (11, 12, 13) for the projection of images onto at least one projection surface (1), wherein the geometric data of the at least one projection surface (1) are stored in advance in a computer unit (20), wherein
a) the at least one projection device (11, 12, 13) projects previously known calibration patterns (30) onto at least a part of the projection surface (1),
b) the calibration patterns (30) are recorded as calibration image by at least one camera device (15) and the data of the calibration image are transmitted to the computer unit (20), wherein
c) by means of the computer unit (20) the deviation between the recorded real calibration image and an ideal imaging result of the previously known calibration pattern (30) on the projection surface (1) is determined automatically as reference pattern (40), wherein for this purpose the real setup of the projection surface (1), the at least one projection device (11, 12, 13) and the camera device (15) is modelled in a virtual model with reference to the known geometry of the projection surface (1), the at least one projection device (11, 12, 13) and the camera device (15), wherein subsequently
d) the computer unit (20) determines a correction transformation (50) from the deviation between the real calibration image and the reference pattern (40), so that the interconnection of the correction transformation (50) with a real projection of images by the at least one projection device (11, 12, 13) in particular in an overlap region (2, 2', 2") of several images corresponds to the reference pattern (40) except for a small, in particular minimum deviation, wherein the correction transformation (50) includes a displacement of at least one point (31, 32, 33, 34) of the recorded real calibration image onto a point (41, 42, 43, 44) of the reference pattern (40).

2. The calibration method according to at least one of the preceding claims, **characterized in that** overlapping projections of at least two projection devices (11, 12, 13) are aligned by minimizing the deviation from the reference pattern (40) such that no discontinuities are visible in the overlap region (2, 2', 2").

3. The calibration method according to at least one of the preceding claims, **characterized in that** the projection surface (1) at least partly includes a spherical shell, a cylindrical shell and/or a flat surface.

4. The calibration method according to at least one of the preceding claims, **characterized in that** the camera device (15) includes at least one digital camera, at least one video camera, at least one fish-eye camera and/or at least one webcam.

5. The calibration method according to at least one of the preceding claims, **characterized in that** at least one camera device (15) for recording an image of the projection surface (1) is rotatably mounted about at least one axis.

6. The calibration device according to at least one of the preceding claims, **characterized in that** at least one projection device (11, 12) includes at least one beamer, laser projector, LCD projector and/or DLP projector.

7. The calibration method according to at least one of the preceding claims, **characterized in that** at least one calibration pattern (30) is a strip pattern in which individual strips are arranged parallel to each other.

8. The calibration method according to at least one of the preceding claims, **characterized in that** at least one calibration pattern (30) includes curved, pre-distorted, monochrome, polychrome and/or color-coded strips and/or a dot pattern.

9. The calibration method according to at least one of the preceding claims, **characterized in that** before the evaluation of a shot of at least one calibration pattern (30) the camera device (15) records a black image.

10. The calibration method according to at least one of the preceding claims, **characterized in that** in the overlap region (2, 2', 2") a blending is made for adaptation of the brightness values.

11. The calibration method according to at least one of the preceding claims, **characterized in that** in dependence on the correction transformation (50) at least one spatial orientation of at least one projection device (11, 12, 13) is varied automatically.

12. The calibration method according to at least one of the preceding claims, **characterized in that** parameters of the camera device (15) are automatically determined by recording a shot of a previously known pattern, in particular a marker pattern on the projection surface (1), and the computing means (20) calculates the parameters therefrom.

13. A calibration system with at least one projection device (11, 12, 13) for the projection of images on at least one projection surface (1), wherein the geometric data of the at least one projection surface (1) are stored in advance in a computer unit (20), wherein
a) the at least one projection device (11, 12, 13) is equipped for the projection of previously known calibration patterns (30) on at least a part of the projection surface (1),
b) at least one camera device (15) is equipped for recording the calibration patterns (30) as calibration image, wherein the data of the calibration image can be transmitted to the computer unit (20), and
c) the computer unit (20) is equipped for automatically determining the deviation between the recorded real calibration image and an ideal imaging result of the previously known calibration pattern (30) on the projection surface (1) as reference pattern (40), wherein for this purpose the real setup of the projection surface (1), the at least one projection device (11, 12, 13) and the camera device (15) is modelled in a virtual model with reference to the known geometry of the projection surface (1), the at least one projection device (11, 12, 13) and the camera device (15), and
d) a correction means is equipped for determining a correction transformation (50) from the deviation between the real calibration image and the reference pattern (40), so that the interconnection of the correction transformation (50) with a real projection of images by the at least one projection device (11, 12, 13) in particular in an overlap region (2, 2', 2") of several images corresponds to the reference pattern (40), except for a small, in particular minimum deviation, wherein the correction transformation (50) includes a displacement of at least one point (31, 32, 33, 34) of the recorded real calibration image onto a point (41, 42, 43, 44) of the reference pattern (40).

## Revendications

1. Procédé de calibrage pour au moins un dispositif de projection (11, 12, 13) pour la projection d'images sur au moins une surface de projection (1), dans lequel les données géométriques de la surface de projection au moins au nombre de une (1) ont été mémorisées au préalable ou le sont actuellement dans une unité de calcul (20), dans lequel
a) le dispositif de projection (11, 12, 13) au moins au nombre de un projette des modèles de calibrage (30) préalablement connus sur au moins une partie de la surface de projection (1),
b) les modèles de calibrage (30) sont enregistrés par au moins un dispositif à caméra (15) en tant qu'image de calibrage et les données de l'image de calibrage sont transmises à l'unité de calcul (20), dans lequel
c) l'unité de calcul (20) permet de détecter de manière automatique l'écart entre l'image de calibrage réelle enregistrée et un résultat de reproduction idéal du modèle de calibrage (30) préalablement connu sur la surface de projection (1) en tant que modèle de référence (40), la structure réelle de la surface de projection (1), du dispositif de projection (11, 12, 13) au moins au nombre de un et du dispositif à caméra (15) dans un modèle virtuel à l'aide de la géométrie connue de la surface de projection (1), du dispositif de projection (11, 12, 13) au moins au nombre de un et du dispositif à caméra (15) étant modélisée, dans lequel directement après
d) l'unité de calcul (20) détermine à partir de l'écart entre l'image de calibrage réelle et le modèle de référence (40), une transformation de correction (50) si bien que la liaison entre la transformation de correction (50) et une projection réelle d'images par le dispositif de projection (11, 12, 13) au moins au nombre de un correspond en particulier dans une zone de chevauchement (2, 2', 2") de plusieurs images, au modèle de référence (40) à un faible écart près, en particulier à un écart minimal, dans lequel la transformation de correction (50) présente un déplacement d'au moins un point (31, 32, 33, 34) de l'image de calibrage réellement enregistrée sur un point (41, 42, 43, 44) du modèle de référence (40).

2. Procédé de calibrage selon au moins la revendication précédente, **caractérisé en ce que** les projections se chevauchant d'au moins deux dispositifs de projection (11, 12, 13) sont orientées de telle manière par la minimisation de l'écart par rapport au modèle de référence (40) qu'aucune discontinuité n'est visible dans la zone de chevauchement (2, 2', 2").

3. Procédé de calibrage selon au moins l'une quelconque des revendications précédentes, **caractérisé en ce que** la surface de projection (1) présente au moins partiellement une coque sphérique, une coque cylindrique et/ou une surface plane.

4. Procédé de calibrage selon au moins l'une quelconque des revendications précédentes, **caractérisé en ce que** le dispositif à caméra (15) présente au moins une caméra numérique, au moins une caméra vidéo, au moins une caméra à très grand angle et/ou au moins une webcam.

5. Procédé de calibrage selon au moins l'une quelconque des revendications précédentes, **caractérisé en ce qu'**au moins un dispositif à caméra (15) pour l'enregistrement d'une image est logé par la surface de projection (1) de manière à pouvoir tourner autour au moins d'un axe.

6. Procédé de calibrage selon au moins l'une quelconque des revendications précédentes, **caractérisé en ce qu'**au moins un dispositif de projection (11, 12) présente au moins un vidéoprojecteur, un projecteur laser, un projecteur LCD et/ou un projecteur DLP.

7. Procédé de calibrage selon au moins l'une quelconque des revendications précédentes, **caractérisé en ce qu'**au moins un modèle de calibrage (30) est un modèle à bandes, dans le cadre duquel les différentes bandes sont disposées de manière parallèle les unes par rapport aux autres.

8. Procédé de calibrage selon au moins l'une quelconque des revendications précédentes, **caractérisé en ce qu'**au moins un modèle de calibrage (30) présente des bandes incurvées, préalablement déformées, monochromes, polychromes et/ou codées en couleur et/ou présente un motif de points.

9. Procédé de calibrage selon au moins l'une quelconque des revendications précédentes, **caractérisé en ce que** le dispositif à caméra (15) enregistre une image noire avant d'évaluer un enregistrement d'au moins un modèle de calibrage (30).

10. Procédé de calibrage selon au moins l'une quelconque des revendications précédentes, **caractérisé en ce qu'**un mélange des couleurs (blending) est effectué pour adapter les niveaux de luminance dans la zone de chevauchement (2, 2', 2").

11. Procédé de calibrage selon au moins l'une quelconque des revendications précédentes, **caractérisé en ce qu'**au moins une orientation spatiale d'au moins un dispositif de projection (11, 12, 13) est automatiquement modifiée en fonction de la transformation de correction (50).

12. Procédé de calibrage selon au moins l'une quelconque des revendications précédentes, **caractérisé en ce que** des paramètres du dispositif à caméra (15) sont détectés automatiquement, **en ce qu'**un modèle préalablement connu, en particulier un modèle de marqueurs sur la surface de projection (1) est enregistré, et **en ce que** le moyen de calcul (20) en déduit les paramètres.

13. Système de calibrage comportant au moins un dispositif de projection (11, 12, 13) pour la projection d'images sur au moins une surface de projection (1), dans lequel les données géométriques de la surface de projection (1) au moins au nombre de une ont été au préalable mémorisées dans une unité de calcul (20) ou le sont actuellement, sachant
a) que le dispositif de projection (11, 12, 13) au moins au nombre de un est installé sur au moins une partie de la surface de projection (1) pour la projection de modèles de calibrage (30) préalablement connus,
b) qu'au moins un dispositif à caméra (15) est installé pour enregistrer des modèles de calibrage (30) en tant qu'image de calibrage, dans lequel les données de l'image de calibrage peuvent être transmises à l'unité de calcul (20) et
c) que l'unité de calcul (20) est installée pour déterminer automatiquement l'écart entre l'image de calibrage réelle enregistrée et un résultat de représentation idéal du modèle de calibrage (30) préalablement connu sur la surface de projection (1) en tant que modèle de référence (40), dans lequel la structure réelle de la surface de projection (1), du dispositif de projection (11, 12, 13) au moins au nombre de un et du dispositif à caméra (15) dans un modèle virtuel à l'aide de la géométrie connue de la surface de projection (1), du dispositif de projection (11, 12, 13) au moins au nombre de un et du dispositif à caméra (15) est modélisée, et
d) qu'un moyen de correction est installé pour déterminer une transformation de correction (50) à partir de l'écart entre l'image de calibrage réelle et le modèle de référence (40) de sorte que la liaison entre la transformation de correction (50) et une projection réelle d'images par le dispositif de projection (11, 12, 13) au moins au nombre de un correspond en particulier dans une zone de chevauchement (2, 2', 2") de plusieurs images, au modèle de référence (40) à un faible écart près, en particulier à un écart minimal, dans lequel la transformation de correction (50) présente un déplacement d'au moins un point (31, 32, 33, 34) de l'image de calibrage réellement enregistrée sur un point (41, 42, 43, 44) du modèle de référence (40).
